**Europäisches Patentamt**

**European Patent Office**

**Office européen des brevets**

(19)

(11) Veröffentlichungsnummer: **0 261 590**
**B1**

# EUROPÄISCHE PATENTSCHRIFT

(45) Veröffentlichungstag der Patentschrift:
**05.09.90**

(21) Anmeldenummer: **87113599.2**

(22) Anmeldetag: **17.09.87**

(51) Int. Cl.⁵: **C01B 13/34,** C01F 7/02,
C01G 25/02, B01J 2/08

(54) Verfahren zur Herstellung von Metalloxiden oder Metallmischoxiden.

(30) Priorität: **24.09.86 DE 3632396**

(43) Veröffentlichungstag der Anmeldung:
**30.03.88 Patentblatt 88/13**

(45) Bekanntmachung des Hinweises auf die Patenterteilung:
**05.09.90 Patentblatt 90/36**

(84) Benannte Vertragsstaaten:
**DE FR GB**

(56) Entgegenhaltungen:
EP-A- 0 048 360
US-A- 3 933 679
US-A- 4 043 507

(73) Patentinhaber: **HOECHST AKTIENGESELLSCHAFT,
Postfach 80 03 20, D-6230 Frankfurt am Main 80(DE)**

(72) Erfinder: **Kirchhöfer, Hermann, Dr., Ringstrasse 25,
D-8751 Niedernberg(DE)**

**Beschreibung**

Die vorliegende Erfindung betrifft ein Verfahren zur Herstellung von Pulvern aus Metalloxiden oder Metallmischoxiden mit ausgezeichneter Rieselfähigkeit und hoher Schüttdichte. Bei diesem Verfahren werden Metallsalzlösungen unter Verwendung von Ultraschall in feine Tröpfchen zerteilt, die dann in einer Ammoniakgasatmosphäre in stabile Metallhydroxid-Gelteilchen umgewandelt werden. Diese verfestigten Gelteilchen werden aufgefangen und nach Trocknen in die entsprechenden Metalloxide oder Metallmischoxide überführt.

Es ist bereits bekannt (DE-AS 24 59 445) Thorium- bzw. Uransalzlösungen mittels eines in Oszillation versetzten Flüssigkeitsstrahls in feine Tropfen zu zerteilen und diese Tropfen dann durch Fällung der Hydroxyde in einer Ammoniakgasatmosphäre teilweise zu verfestigen, bevor sie in eine Ammoniaklösung eintauchen. Die in die Oxide überführten Kügelchen haben Durchmesser von 200 - 500 μm.

Gemäß einem anderen Verfahren (DE-OS 30 35 331) lassen sich kugelförmige Teilchen, die sich speziell für den Einsatz in der Nukleartechnik eignen, mit Durchmessern zwischen 50 und 2500 μm und einem engen Kornspektrum herstellen. Dabei werden Lösungen oder Schmelzen durch ein Vibratorsystem bei Frequenzen von 50 - 2500 Hz in Tropfen umgewandelt, die anschließend chemisch oder physikalisch zu sphärischen Teilchen verfestigt werden. Die Tropfen- bzw. Teilchengröße hängt ab von der Frequenz des Vibrators und der Durchflußrate der Flüssigkeit.

Zur Verfestigung der Tröpfchen sind auch andere Verfahren bekannt, bei denen entweder durch Wasserentzug (Sol-Gel- Verfahren nach US-PS 3 290 122) oder durch Reaktion von polymeren Zusätzen mit einem alkalischen Medium (DE-PS 12 12 841) die Tropfen verfestigt werden. Gemeinsam bei all diesen Verfahren ist das Einbringen der - teilweise schon "vorverfestigten" - Tropfen in eine flüssige Phase, in der dann die Verfestigung beendet wird.

Alle diese Verfahren weisen Nachteile auf, die entweder in der erreichbaren minimalen Korngröße (Korngrößen von nur wenigen μm Durchmesser sind nicht herstellbar), dem relativ breiten Kornspektrum oder der Zwischenschaltung von meist organischen Sperrflüssigkeiten liegen, bei deren Durchschreiten die Tropfen Fremdstoffe aufnehmen können, die somit in die Produkte gelangen. Außerdem werden diese - meist organischen - Phasen durch Adsorptionsvorgänge an den Tropfen verbraucht, so daß sie ständig ergänzt werden müssen. Ein weiterer Nachteil bei dem Einsatz von flüssigen Sperrphasen besteht in der mit dem Wasserentzug im Tropfen einhergehenden Wasseranreicherung in der alkalischen Phase. Um den Prozeß über längere Zeit unter konstanten Bedingungen betreiben zu können, sind Regenerationskreisläufe erforderlich, in denen der Wasseranteil wieder reduziert wird.

Ziel der vorliegenden Erfindung ist es, Substanzen mit sehr geringem Korndurchmesser und engem Kornspektrum herzustellen und die erzeugten kugelförmigen Teilchen ohne Zwischenschaltung einer flüssigen Phase aufzufangen. Gleichzeitig sollen die verfahrenstechnisch aufwendigen Regenerationskreisläufe vermieden werden und ein hoher Flüssigkeitsdurchsatz erreichbar sein.

Es wurde nun ein Verfahren zur Herstellung eines Metalloxids oder Metallmischoxids gefunden, wobei man eine wäßrige Lösung mindestens einer wasserlöslichen, salzartigen Verbindung eines mehrwertigen Metalls in einer Inertgasatmosphäre fein verteilt, die erhaltenen Tröpfchen solange mit einem Ammoniak enthaltenden Gas in Kontake bringt, bis das Hydroxid (die Hydroxide) des (der) mehrwertigen Metalls (Metalle) mindestens ausgefällt (sind) und man die entstehenden kleine Gelkügelchen, die Metallhydroxid und Wasser enthalten, auffängt, das dadurch gekennzeichnet ist, daß die eingesetzte wäßrige Lösung durch Ultraschal, dessen Frequenz mindestens 19 kHz beträgt, fein verteilt wird, man radialsymmetrisch um die Austrittsöffnung für die Lösung einen Inertgas-Laminar-Flow erzeugt, der parallel zur Austrittsrichtung der Lösung ausgerichtet ist, man die Gelkügelchen ohne Zwischenschaltung einer Flüssigphase auffängt und man die verfestigten Gelkügelchen trocknet und durch Erhitzen in das Metalloxid bzw. Metallmischoxid unwandelt.

Aufgrund der hohen Frequenz (mindestens 19 kHz) und Schallintensität (ca. 10 W/cm$^2$) des verwendeten Ultraschalls erreichen die Schwingungsbewegungen der Flüssigkeitstropfen so große Geschwindigkeiten (ca. 30 cm/sek.) und so große Beschleunigungswerte (ca. das 100.000-fache der Erdbeschleunigung), daß die einzelnen Tropfen zerreißen und Partikel mit nur wenigen μm Durchmesser bilden. Gleichzeitig wird jedoch ein sehr enges Kornspektrum eingehalten.

Ein Vorteil in der Anwendung von Ultraschall liegt in der weitgehenden Unabhängigkeit von den physikalischen Eigenschaften (z.B. der Viskosität) der Metallsalzlösung. Diese Eigenschaften üben nur noch geringen Einfluß auf die Größe der zerteilten Tropfen aus, so daß beispielsweise die Konzentration in weiten Bereichen variiert werden kann.

Es war zwar zu erwarten, das die Teilchengröße mit zunehmender Frequenz abnimmt; es war jedoch völlig überraschend, daß trotz der kleinen Teilchengröße, die mit dem Ultraschallzerstäuber erreicht wurde, Durchsatzmengen von mindestens einem Liter pro Stunde und Zerstäubereinheit erzielt werden konnten.

Gemäß der Erfindung kann als Salz eines mehrwertigen Metalls prinzipiell jede wasserlösliche Metallsalz-Verbindung eingesetzt werden, die mit Ammoniak schwerlösliche Verbindungen bildet. Bevorzugt sind Lösungen von 2-, 3- oder 4-wertigen Metallen.

Für die technische Keramik von besonderem Interesse sind beispielsweise die folgenden Metallsalzlösungen:
Aluminiumlösungen (für $Al_2O_3$)
Aluminium-Titanlösungen (für Aluminiumtitanat)
Aluminiumlösungen mit Zusätzen von Calcium- oder Magnesiumlösungen oder anderen bekannten Sinterhilfsmitteln
Zirkonlösungen (für $ZrO_2$)
Zirkonlösungen mit Zusätzen von Calcium-, Magnesium- oder Yttriumlösungen zur Beeinflussung der Kristallstruktur von Zirkondioxid
oder beliebige Mischungen dieser Lösungen.

Versprühbar sind aber auch andere Metallsalzlösungen wie z.B: V-, Cr-, Mo-, W-, Mn-, Fe-, Co-, Ni-Salzlösungen.

Wegen der besonders leichten Umsetzung zum Oxid bieten sich als anionische Komponenten vor allem organische Verbindungen wie z.B. Acetate oder Formiate oder aber Nitrate besonders an. Wegen ihrer hohen Zersetzungstemperatur sind Sulfate, Carbonate und Phosphate weniger geeignet. Halogenide können versprüht werden, sollten jedoch wegen ihrer korrosiven Eigenschaften gegenüber Metallapparaturen möglichst nicht eingesetzt werden.

Die Konzentration der eingesetzten Metallsalzlösung ist nicht kritisch und wird nur durch die Löslichkeit der Salze beschränkt. Es können Metallsalzlösungen in Konzentrationen von 0,01 bis 1 Mol/l problemlos zerstäubt werden. Setzt man Zirkoniumsalzlösungen ein, so kann die Konzentration bis zu 5 Mol/l erhöht werden.

Zur Erhöhung der BET-Oberfläche und zur Steuerung der Härte der Agglomerate (dies entspricht der Härte der Kügelchen nach dem Calcinieren) können der Lösung verschiedene Zusätze beigemischt werden. Diese Zusätze sollen sich beim späteren Calcinieren unter oxidativen Bedingungen (Sauerstoff enthaltende Atmosphäre) vollständig zersetzen und verflüchtigen. Als Zusätze sind organische, wasserlösliche polymere Verbindungen (z.B.PVA, Polyacrylamid) möglich.

Als Obergrenze für die Konzentrationen dieser Zusätze erwiesen sich im Falle von PVA 30 g/l und im Falle von Polyacrylamid 10 g/l. Besonders große BET-Oberflächen erreicht man bei einem Zusatz von 0,1 bis 1 g/l PVA, bzw. 0,1 bis 1 g/l Polyacrylamid.

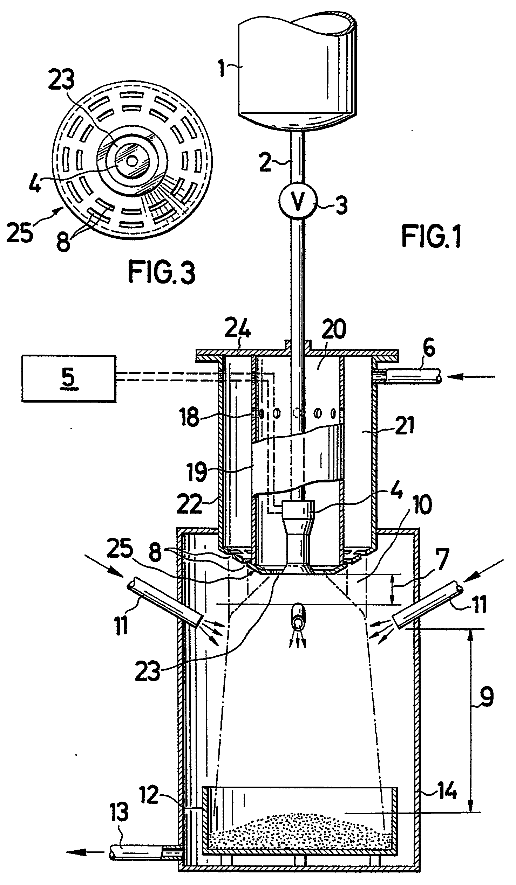

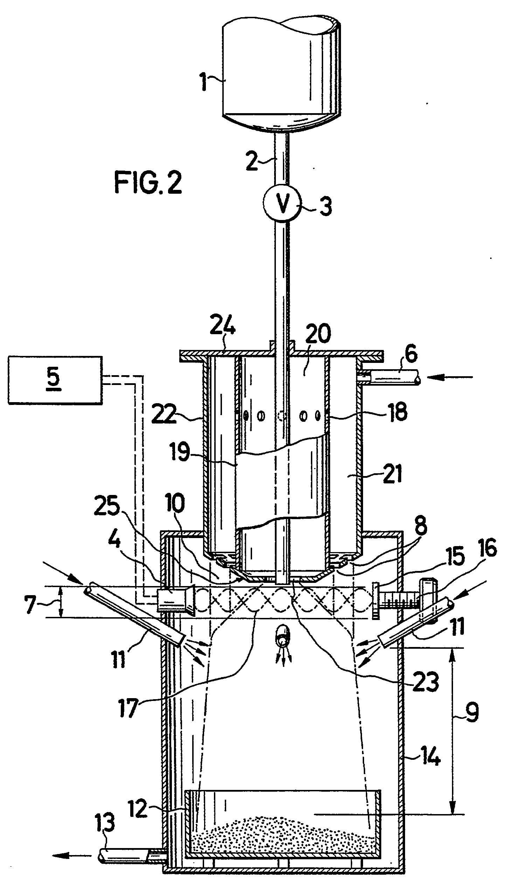

Das erfindungsgemäße Verfahren wird im Folgenden an den Figuren 1 und 2 näher erläutert, die bevorzugte Ausgestaltungen der Erfindung darstellen. Figur 1 zeigt eine Vorrichtung, bei der die Metallsalz-Lösung mittels eines Ultraschallzerstäubers in feine Tröpfchen zerteilt wird.

Die Lösung wird in das Vorratsgefäß (1) der Zerstäubungsanordnung gefüllt und über Zuleitung (2) durch eine Dosiereinrichtung (3) in den Zerstäuber (4) eingebracht. Die Frequenz des verwendeten Ultraschallzerstäubers bestimmt die Tröpfchengröße. Sie sollte mindestens 19 kHz betragen. Als Richtwert kann gelten, daß eine Frequenz von 20 - 40 kHz Teilchen mit Durchmessern um 100 μm, eine Frequenz von 1MHz Teilchen mit Durchmessern von etwa 10 - 50 μm erzeugt. Die Frequenz wird über den Frequenzgenerator (5) geregelt. Da die Tröpfchen neben den Metallionen sowohl Wasser als auch "eliminierbare" Anionen enthalten, sind die Pulverteilchen nach dem Überführen ins Oxid zum Teil um bis zu einem Faktor 3 kleiner.

Die Lösung wird an der Schwingeröffnung vernebelt. Um ein einwandfreies Vernebeln der Lösung sicherzustellen und um die Rückbildung von größeren Tropfen an dem Ultraschallschwinger bzw. an der Austrittsöffnung für die Lösung zu vermeiden, wird der Bereich der Schwingeröffnung mit einem Inertgas gespült, welches nicht mit den versprühten Metallsalzlösungen reagiert, z.B. Luft, Stickstoff oder Argon. Das Inertgas wird zweckmäßigerweise durch die Zuleitung (6) in einen Behälter eingeleitet, der aus zwei konzentrisch angeordneten Rohren (19) und (22) gebildet wird, die auf einer Seite mit einer planaren Abdeckung (24) verbunden sind. Auf der anderen Seite ragt das innere Rohr (19) aus dem äußeren Rohr (22) heraus. Auf dieser Seite sind die beiden Rohrenden mit einer ringförmigen, zum Rohrmittelpunkt hin konisch zulaufenden Abdeckung (25) versehen, wobei deren innere, kreisförmige Öffnung größer ist als der in sie hineinragende Zerstäuber (4), so daß ein ringförmiger Spalt (23) entsteht. In Figur 3 ist eine axiale Projektion des Behälters gezeigt, mit Blickrichtung von unten auf den Behälter. Das Inertgas füllt den von den beiden Rohren (19) und (22) gebildeten äußeren Raum (21) und dringt über Einlaßöffnungen (18) in den inneren Raum (20). Die Inertgaswolke dringt aus dem ringförmig um den Zerstäuber angeordneten Spalt (23) aus dem inneren Rohr (19) heraus.

Der Inertgaswolke wird in der Vernebelungszone (7) ein Inertgas-Laminar-Flow (10) senkrecht zur Vernebelungsebene überlagert, der den Vernebelungsvorgang wesentlich verbessert. Dabei tritt das Inertgas aus mehreren rotationssymmetrisch um den Ultraschallzerstäuber (4) angeordneten Öffnungen (8) in der Abdeckung (25). Der Laminar-Flow sorgt dafür, daß die Zerstäubungswolke sich nur geringfügig senkrecht zur Strömungsrichtung ausdehnt, außerdem schirmt er den Zerstäuber nach außen ab und treibt gleichzeitig die Tröpfchen in Richtung Reaktionszone (9), die Ammoniakgas enthält. Einige Zentimeter (ca. 5 cm) unterhalb des Ultraschallschwingers wird durch die Zuleitungen (11) radialsymmetrisch Ammoniakgas in das Reaktionsgefäß (14) eingeblasen. Die Durchmischung des Nebels aus Lösungströpfchen und Inertgas mit Ammoniakgas führt dazu, daß die Tröpfchen rasch mit dem Ammoniak reagieren. Diese Reaktion bewirkt wegen der frei werdenden Reaktionswärme einen Wasserentzug in den Tröpfchen und so eine Umwandlung in den Gelzustand binnen kurzer Zeit (5 bis 10 Sekunden) und über eine Fallstrecke von nur wenigen Zentimetern. Die Umwandlungsgeschwindigkeit wird durch die Temperatur in der Reaktionszone beeinflußt. Da die Reaktion mit dem Ammoniak eine exotherme Reaktion ist, wird bis zum Erreichen einer Gleichgewichtstemperatur (ca. 50°C) ein Temperaturanstieg registriert. Durch Kühlen oder Aufheizen (nicht gezeichnet) der Wände des Reaktionsgefäßes (14) bzw. der zu versprühenden Lösung kann die Temperatur in der Reaktionszone (9) beeinflußt werden. Die Geltröpfchen fallen aufgrund ihres Gewichts in ein Auffanggefäß (12) unterhalb des Schwingers. Unterstützt wird dieses Herunterfallen der Tröpfchen durch die Gasströmung, wenn diese von der Abnebelungszone in Richtung des darunter befindlichen Auffanggefäßes verläuft. Das Gas verläßt das Reaktionsgefäß (14) durch Öffnung (13). Bei Raumtempertur reicht eine Fallstrecke von 200 mm (Schwingeröffnung - Auffanggefäß) aus um verfestigte Kugeln zu erzielen.

Eine andere bevorzugte Ausgestaltung der Erfindung ist in Fig. 2 dargestellt. Hier wird zur Zerstäubung eine mittels Ultraschall erzeugte stehende Welle (17) benutzt. Die Lösung wird aus dem Vorratsgefäß (1) durch die Leitung (2) über eine Dosierrichtung (3) in die stehende Welle eingebracht. Analog zu der oben beschriebenen Vorgehensweise wird auch im Falle der Flüssigkeitszerstäubung mittels stehender Welle der Bereich der Austrittsöffnung für die Metallsalz-Lösung mit einem Inertgas gespült. In gleicher Weise geschieht die Überlagerung der Inertgaswolke mit einem Laminar-Flow. Die stehende Welle wird erzeugt, indem man die Ausbreitungsrichtung des Ultraschalls senkrecht zur Fließrichtung des Flüssigkeitsstrahls wählt und die Ultraschallwelle an einer Wand (15) reflektiert. Da zur Erzeugung einer stehenden Welle diese in einem Knotenpunkt reflektiert werden muß (Phasensprung um $\lambda/2$), ist die Reflexionswand beweglich angeordnet, um sie auf die Schallquelle zu- oder fortbewegen zu können (mittels Justierschraube (16)). In der Praxis erkennt man die Ausbildung einer solchen stehenden Welle daran, das der optimal vernebelt. Die besten Ergebnisse erzielt man, wenn der Flüssigkeitsstrahl so justiert wird, daß er im Bereich eines Schwingungsstrahl zerrissen wird, da hier die Schallenergie am größten ist.

Die nachfolgende Aufarbeitung der Gelkugeln bestimmt die Agglomerat- und Pulvereigenschaften. Der erste Schritt der Aufarbeitung der Gekügelchen ist zweckmäßigerweise das Auswaschen der Ammoniumsalze aus den Gelkugeln mit entmineralisiertem oder destilliertem Wasser. Handelt es sich bei diesen Ammoniumsalzen um leicht flüchtige oder leicht zersetzbare Salze, so kann das Auswaschen entfallen.

Daran schließt sich das Trocknen der Kugeln an, das z.B. bei einer Temperatur von 70 - 90°C und einer Haltezeit von 5 - 20 Stunden erfolgen kann. Besonders geeignet für diese Aufarbeitungsschritte ist der Rotationsverdampfer. Erstens kann der Waschvorgang schneller durchgeführt werden und zweitens kann die Trocknungsdauer auf 1/2 - 2 Stunden verkürzt werden. Dabei erhält man ein gleichmäßiges nahezu kugelförmiges und gut rieselförmiges Granulat. An diesen Verarbeitungsschritt schließt sich der Calzinierungsschritt an, bei dem nicht eliminierte anionische bzw. organische Bestandteile ausgetrieben werden und die Hydroxide in die Oxide umgewandelt werden. Das Calcinieren erfolgt - wenn organische Bestandteile vorhanden sind - unter oxidativen Bedingungen in einer Sauerstoff enthaltenden Atmosphäre, vorzugsweise bei Temperaturen zwischen 400 und 800°C und bei Verweilzeiten von 2 - 10 Stunden. Es kann jedoch ohne weiteres auch unter reduktiven Bedingungen oder unter Vakuum erfolgen. Enthielten die getrockneten Gelkügelchen organische Zusätze, so bestimmt die Calcinierungstemperatur die BET-Oberfläche der Endprodukte, da die organischen Bestandteile sich während des Calcinierens verflüchtigen und freie Poren hinterlassen. Je höher die Temperatur ist, desto mehr neigen die Teilchen jedoch dazu weiter zusammenzusintern, so daß das Porenvolumen und damit die Oberfläche abnimmt. Während bei Calcinierungstemperaturen bis zu 400°C BET-Oberflächen von bis zu 300 m²/g erzielt werden können, liegen die BET-Oberflächenwerte bei Calcinierungstemperaturen von maximal 800°C bei 10 - 20 m²/g.

Überraschenderweise lassen sich mit dem erfindungsgemäßen Verfahren die kristallographischen Hochtemperatur-Modifikationen von $ZrO_2$ und $Al_2O_3$ herstellen, die sonst nur unter hohem energetischen Aufwand darstellbar sind. Tetragonales $ZrO_2$ erhält man bei einer Calcinierungstemperatur vom mindestens 400°C. Bevorzugt ist eine Mindesttemperatur von 600°C. Eine Höchsttemperatur von 800°C sollte aufgrund der dann zu erwartenden geringen BET-Oberfläche nicht überschritten werden. Bevorzugt ist eine Höchsttemperatur von 750°C, besser noch 650°C.

$\gamma$-$Al_2O_3$ erhält man bei Calcinierungstemperaturen von mindestens 200°C. Eine Höchsttemperatur von 750°C, bevorzugt 500°C, sollte nicht überschritten werden. Insbesondere liegt die Obergrenze der Calcinierungstemperatur bie 400°C, noch besser bei 300°C.

Die Erfindung wird durch die folgenden Beispiele näher erläutert.

Beispiele

Die folgenden Beispiele wurden in einer Apparatur gemäß Figur 1 durchgeführt. Verwendbar ist mit gleichem Erfolg aber auch eine Apparatur gemäß Figur 2. Die Auswahl des Schwingsystems (Ultraschallzerstäuber oder stehende Welle) hatte keinen Einfluß auf die entstehenden Produkte. Der eingesetzte Schwingkopf hatte eine Länge von 23 mm und einen Durchmesser von 15 mm. (Hersteller: Fa Lechler, Fellbach, Modell 100.060.3K). Das Reaktionsgefäß (14) hatte einen Durchmesser von 300 mm und eine Höhe von 350 mm. Das Auffanggefäß hatte einen Durchmesser von 200 mm.

In allen Ausführungsbeispielen wurde Stickstoff als Inertgas eingesetzt, das mit einer Durchsatzrate von 1-2 l/h durch die Apparatur strömte. Der Ammoniakgasdurchsatz betrug 2-5 1/h.

Die aufgefangenen Gelkügelchen wurden mit entmineralisiertem Wasser gewaschen und anschließend in einem Rotationsverdampfer getrocknet.

Beispiel 1

Herstellung von Zirkondioxydpulver

Es wurde eine wäßrige Lösung versprüht, die 1 Mol/l $Zr(NO_3)_4$ und 30 g/l Polyvinylakohol (PVA 18/8: Hersteller: Hoechst AG) enthielt. Der Flüssigkeitsdurchsatz betrug 1 l/h. Das gewaschene und getrocknete Pulver wurde dann 15 Stunden bei 600°C in sauerstoffhaltiger Atmosphäre calciniert. Das resultierende Zirkondioxyd hatte tetragonale Kristallstruktur und eine BET-Oberfläche von 22 m²/g. Die Teilchengröße des Pulvers lag zwischen 10 und 50 μm.

Beispiel 2

Herstellung von Aluminiumoxyd

Es wurde eine wäßrige Lösung von Aluminiumhydroxyacetat ($Al(OH)_2(CH_3COO)$) in einer Konzentration von 0,35 Mol/l bei einem Flüssigkeitsdurchsatz von 1 l/h versprüht. Das gewaschene und getrocknete Pulver wurde dann 15 Stunden bei 200°C calciniert. Die Debye-Scherrer-Aufnahmen zeigten, daß $Al_2O_3$ in der γ-Modifikation vorlag. Die Agglomeratgröße lag bei 30 - 100 μm. Die BET-Oberfläche betrug ca. 150 m²/g.

Beispiel 3

Herstellung von Nickeloxyd oder Eisenoxyd oder Kobaltoxyd

Zur Herstellung der genannten Oxyde wurden wäßrige Metallsalzlösungen von $NiSO_4$, $Fe(NO_3)_3$ bzw. $Co(NO_3)_2$ mit jeweils 0,35 Mol/l verwendet und mit einem Durchsatz von 1 l/h versprüht.

Die entstandenen Gelkügelchen wurden gewaschen, getrocknet und anschließend ca. 20 Stunden bei 100°C calciniert. Infolge der niedrigen Calcinierungstemperatur wurde die Kristallisation der Metalloxyde vollständig unterdrückt, so daß röntgenamorphe Oxyde entstanden. Die Agglomeratgröße lag zwischen 50 und 150 μm und die BET-Oberflächenwerte betrugen ca. 230 m²/g.

Beispiel 4

Herstellung von Bleizirkonat

Zur Herstellung von Bleizirkonat, das als Rohstoff für die Piezokeramik eingesetzt werden kann, wurde eine wässrige Lösung von 0,35 Mol/l Bleinitrat ($Pb(NO_3)_2$) und 0,35 Mol/l Zirkonnitrat ($Zr(NO_3)_4$ $5H_2O$) versprüht. Die erhaltenen Gelkügelchen wurde gewaschen, getrocknet und dann 15 Stunden bei 600°C calciniert. Es entstand Bleizirkonat ($PbZrO_3$) mit Perowskit-Struktur und einer BET-Oberfläche von 9,6 m²/g. Die Agglomeratgröße lag bei ca. 50 μm.

Beispiel 5

Herstellung von Aluminiumtitanat

In den Vorratsbehälter der Versprühapparatur wurde eine 15-gew.-%ige wässrige Lösung aus einer Mischung aus einem Mol Aluminiumnitrat ($Al(NO_3)_3$) und einem Mol Titan (III)-Chlorid ($TiCl_3$) gefüllt. Diese Lösung wurde dann mit einem Flüssigkeitsdurchsatz von 1 l/h versprüht. Das gewaschene und getrocknete Pulver wurde dann 12 Stunden bei 600°C calciniert. Mittels Pulverdiffraktometrie konnte am fertigen Produkt die Struktur von Aluminiumtitanat ($Al_2TiO_5$) nachgewiesen werden. Die BET-Oberfläche betrug ca. 12 m²/g und die Agglomeratgröße lag bei 50-100 μm.

Beispiel 6

Herstellung von dotiertem Zirkondioxyd

Zur Herstellung von yttriumhaltigem Zirkondioxyd wurde eine wässrige Lösung aus 0,35 Mol/l Zirkonnitrat (Zr(NO$_3$)$_4$ 5H$_2$O) und 0,02 Mol/l Yttriumnitrat (Y (NO$_3$)$_3$•5H$_2$O) versprüht. Das gewaschene und getrocknete Pulver wurde bei vier verschiedenen Temperaturen jeweils 20 Stunden calciniert, und die Temperaturabhängigkeit der BET-Oberflächen und der resultierenden Kristallstruktur untersucht.

Tabelle

| Calcinierungs Temperatur (°C) | Kristall- struktur | BET-Oberfläche (m$^2$/g) | Agglomerat- größe |
|---|---|---|---|
| 300 | amorph | ca. 120 | 50–100 |
| 400 | ZrO$_2$ (t) | n.b. | " |
| 500 | ZrO$_2$ (t) + (m) | n.b. | " |
| 600 | ZrO$_2$ (t) + (m) | 7.2 | " |

Dabei bedeutet: ZrO$_2$ (t) tetragonales Zirkondioxyd
ZrO$_2$ (t) + (m) tetragonales und monoklines Zirkondioxyd
n.b. nicht bestimmt

## Patentansprüche

1. Verfahren zur Herstellung eines Metalloxids oder Metallmischoxids, wobei man eine wäßrige Lösung mindestens einer wasserlöslichen salzartigen Verbindung eines mehrwertigen Metalls in einer Inertgasatmosphäre fein verteilt, die erhaltenen Tröpfchen solange mit einem Ammoniak enthaltenden Gas in Kontake bringt, bis das Hydroxid (die Hydroxide) des (der) mehrwertigen Metalls (Metalle) mindestens teilweise ausgefällt ist (sind) und man die entstehenden kleinen Gelkügelchen, die Metallhydroxid und Wasser enthalten, auffängt, dadurch gekennzeichnet, daß die eingesetzte wäßrige Lösung durch Ultraschall, dessen Frequenz mindestens 19 kHz beträgt, fein verteilt wird, man radialsymmetrisch um die Austrittsöffnung für die Lösung einen Inertgas-Laminar-Flow erzeugt, der parallel zur Austrittsrichtung der Lösung ausgerichtet ist, man die Gelkügelchen ohne Zwischenschaltung einer Flüssigphase auffängt und man die verfestigten Gelkügelchen trocknet und durch Erhitzen in das Metalloxid bzw. Metallmischoxid umwandelt.

2. Verfahren nach Anspruch 1, dadurch gekennzeichnet, daß die Lösung mittels Ultraschallzerstäuber fein verteilt wird.

3. Verfahren nach Anspruch 1, dadurch gekennzeichnet, daß die Lösung durch Einbringen in eine stehende Ultraschallwelle fein verteilt wird.

4. Verfahren nach Anspruch 1, dadurch gekennzeichnet, daß man die Tröpfchen solange in Kontakt mit dem Ammoniak enthaltenden Gas bringt, bis das Metallhydroxid zumindest teilweise ausgefällt ist.

5. Verfahren nach Anspruch 1, dadurch gekennzeichnet, daß man die durch den Ultraschallzerstäuber erzeugten Tröpfchen unter Schwerkraftwirkung nach unten fallen läßt und dann in Kontakt bringt mit dem Ammoniak enthaltenden Gas.

6. Verfahren nach Anspruch 1, dadurch gekennzeichnet, daß die wäßrige Lösung organische, wasserlösliche Verbindungen enthält.

7. Verfahren nach Anspruch 1, dadurch gekennzeichnet, daß man die getrockneten Gelkügelchen in einer Sauerstoff enthaltenden Atmosphäre erhitzt.

8. Verfahren nach Anspruch 1, dadurch gekennzeichnet, daß die Gelkügelchen mit entmineralisertem Wasser gewaschen werden.

9. Verfahren nach Anspruch 7, dadurch gekennzeichnet, daß die Gelkügelchen bei 70 - 90°C getrocknet werden.

10. Verfahren nach Anspruch 1, dadurch gekennzeichnet, daß die Wände des Reaktionsgefäßes gekühlt werden.

11. Verfahren nach Anspruch 1, dadurch gekennzeichnet, daß die Wände des Reaktionsgefäßes aufgeheizt werden.

12. Verfahren nach Anspruch 1, dadurch gekennzeichnet, daß die zu versprühende Lösung gekühlt wird.

13. Verfahren nach Anspruch 1, dadurch gekennzeichnet, daß die zu versprühende Lösung aufgeheizt wird.

**Revendications**

1. Procédé pour préparer une poudre d'oxyde de métal ou d'oxydes mixtes de métaux, selon lequel on fragmente une solution aqueuse d'au moins un composé salin hydrosoluble d'un métal plurivalent, en atmosphère inerte, on met les gouttelettes obtenues en contact avec un gaz contenant de l'ammoniac jusqu'à précipitation au moins partielle de l'hydroxyde ou des hydroxydes du métal plurivalent ou des métaux plurivalents et l'on recueille les petites billes ou petites sphères de gel ainsi obtenues, qui contiennent de l'hydroxyde de métal et de l'eau, procédé caractérisé en ce qu'on fragmente finement la solution aqueuse que l'on utilise en la soumettant à des ultrasons d'une fréquence minimale de 19 kHz, on produit un écoulement laminaire de gaz inerte à symétrie radiale autour de l'ouverture de sortie de la solution, écoulement qui est dirigé parallèlement à la direction de sortie de la solution , on recueille les petites billes ou petites sphères de gel sans utilisation intermédiaire d'une phase liquide et l'on sèche les petites sphères ou petites billes de gel solidifiées et, par chauffage, on les transforme en l'oxyde de métal ou en l'oxyde mixte de métal.

2. Procédé selon la revendication 1, caractérisé en ce qu'on fragmente finement la solution à l'aide d'un atomiseur à ultrasons.

3. Procédé selon la revendication 1, caractérisé en ce qu'on fragmente finement la solution en l'introduisant dans une onde stationnaire d'ultrasons.

4. Procédé selon la revendication 1, caractérisé en ce qu'on met les gouttelettes en contact avec le gaz contenant de l'ammoniac jusqu'à précipitation au moins partielle de l'hydroxyde de métal.

5. Procédé selon la revendication 1, caractérisé en ce qu'on laisse tomber sous l'influence de la pesanteur le gouttelettes produites par l'atomiseur à ultrasons et on les met ensuite en contact avec le gaz contenant d l'ammoniac.

6. Procédé selon la revendication 1, caractérisé en ce que la solution aqueuse contient des composés organiques hydrosolubles.

7. Procédé selon la revendication 1, caractérisé en ce qu'on chauffe, dans une atmosphère contenant de l'oxygène, les petites sphères ou petites billes du gel séché.

8. Procédé selon la revendication 1, caractérisé en ce qu'on lave avec de l'eau déminéralisée les petites sphères ou petites billes de gel.

9. Procédé selon la revendication 6, caractérisé en ce qu'on sèche à 70-90 °C les petites sphères ou petites billes de gel.

10. Procédé selon la revendication 1, caractérisé en ce qu'on refroidit les parois du réacteur.

11. Procédé selon la revendication 1, caractérisé en ce qu'on chauffe les parois du réacteur.

12. Procédé selon la revendication 1, caractérisé en ce qu'on refroidit la solution à soumettre à atomisation.

13. Procédé selon la revendication 1, caractérisé en ce qu'on chauffe la solution à soumettre à atomisation.

**Claims**

1. A process for the production of a metal oxide or mixed metal oxide, in which an aqueous solution of at least one water-soluble salt-like compound of a polyvalent metal is finely divided in an inert gas atmosphere, the droplets which are obtained are brought into contact with a gas containing ammonia until such time as the hydroxide (the hydroxides) of the polyvalent metal (metals) is (are) at least partially precipitated and the small gel spherules, which are produced and which contain metal hydroxide and water, are collected, which comprises finely dividing the aqueous solution which is employed by ultrasonic waves, the frequency of which is at least 19 kHz, generating an inert gas laminar flow which is oriented parallel to the outlet direction of the solution radially symmetrically about the outlet aperture for the solution, collecting the gel spherules without interposition of a fluid phase, and drying the solidified gel spherules and converting them, by heating, into the metal oxide or mixed metal oxide.

2. The process as claimed in claim 1, wherein the solution is finely divided by means of ultrasonic atomizers.

3. The process as claimed in claim 1, wherein the solution is finely divided by introduction into a standing ultrasonic wave.

4. The process as claimed in claim 1, wherein the droplets are brought into contact with the gas containing ammonia until such time as the metal hydroxide is at least partially precipitated.

5. The process as claimed in claim 1, wherein the droplets produced by the ultrasonic atomizer are permitted to fall downwards under the action of gravity, and are then brought into contact with the gas containing ammonia.

6. The process as claimed in claim 1, wherein the aqueous solution contains organic, water-soluble compounds.

7. The process as claimed in claim 1, wherein the dried gel spherules are heatedin an atmosphere containing oxygen.

8. The process as claimed in claim 1, wherein the gel spherules are washed with demineralized water.

9. The process as claimed in claim 6, wherein the gel spherules are dried at $70 - 90°C$.

10. The process as claimed in claim 1, wherein the walls of the reaction vessel are cooled.

11. The process as claimed in claim 1, wherein the walls of the reaction vessel are heated.

12. The process as claimed in claim 1, wherein the solution to be sprayed is cooled.

13. The process as claimed in claim 1, wherein the solution to be sprayed is heated.

FIG.3

FIG.1

FIG.2